# EUROPEAN PATENT APPLICATION

(11) **EP 4 332 815 A1**
(43) Date of publication of application: **06.03.2024**
(21) Application number: 23794664.5
(22) Date of filing: 17.01.2023
(51) Int. Cl.: G06F 21/62, G06N 3/08, G06N 3/04

(54) **INTELLIGENT CONNECTED VEHICLE DATA TRAINING METHOD AND ELECTRONIC DEVICE BASED ON PRIVACY DATA PROTECTION, AND COMPUTER READABLE STORAGE MEDIUM**

(30) Priority: 28.04.2022 CN 202210459457
(71) Applicant: Chongqing Changan Automobile Co Ltd, Chongqing 400023 (CN)
(72) Inventor: HAO, Jinlong, Chongqing 400023 (CN); TANG, Zhaoxiang, Chongqing 400023 (CN)
(74) Representative: Schulz Junghans Patentanwälte PartGmbB
(86) International application number: PCT/CN2023/072690
(87) International publication number: WO 2023/207228

(57) **Abstract**

Disclosed is a method for training data of an intelligent connected vehicle based on privacy data protection, which includes: labeling and performing model training on historically collected road test data to obtain a first version of a model, and deploying a low-level feature extraction layer of the first version of the model at a vehicle; performing feature extraction on original data collected by the vehicle through the deployed low-level feature extraction layer at the vehicle to obtain a low-level feature data set and uploading the low-level feature data set to a cloud; performing anonymization on the original data and uploading same to the cloud for data labeling; training and updating other feature extraction layers apart from the low-level feature extraction layer using the uploaded data set and a historical data set at the cloud; and pushing the updated model to the vehicle for synchronous updating. According to the method, while data privacy transfer is ensured, the problem of algorithm performance reduction caused by data anonymization is solved. On the basis, a closed-loop algorithm is constructed, and the problem of model iteration and updating is addressed.

## Description

### Field of the Invention

The present disclosure relates to improvement of a data processing technology for an intelligent connected vehicle, and in particular, to a method for training data of an intelligent connected vehicle based on privacy data protection, belonging to the technical field of data processing and training.

### Background of the Invention

With the rapid growth of automatic driving technology in China, all major main engine manufacturers and technology suppliers are striving to improve their competitiveness, and various methods for acquiring data and training algorithm are provided. For example: (1) CN202210057268, entitled "METHOD AND APPARATUS FOR ACQUIRING DATA, DEVICE, AND STORAGE MEDIUM" of Zhejiang Geely Holding Group Co., Ltd. provides the following techniques: acquiring vehicle data collected by a vehicle sensor and road data collected by a road sensor in a vehicle driving process, performing time-space synchronization on the vehicle data and the road data, fusing the vehicle data and the road data after time-space synchronization according to a high-precision map to obtain target data, performing scene classification based on the target data to obtain scene data corresponding to a plurality of scenes, and constructing an automatic driving scene library according to the scene data. (2) CN201910454082, entitled "METHOD FOR ACQUIRING, ANALYZING, AND UPLOADING ROAD DRIVING DATA OF L3 AUTOMATIC DRIVING SYSTEM" of Zhejiang Leapmotor Technology Co., Ltd. provides the following techniques: acquiring vehicle driving data, involving acquisition and synchronization of the driving data and encoding and caching of the driving data; performing on-line data analysis on the acquired vehicle driving data, involving definition of intermediate result output interface of an automatic driving system, target matching consistency detection, positioning road sign semantic output, extreme vehicle operation detection, and human-computer decision consistency detection; performing data communication and making preparation for the uploading of the vehicle driving data; and receiving and storing the vehicle driving data by a server.

Therefore, more and more data is acquired and used for algorithm training to improve the performance of automatic driving. However, there is a problem of leakage of user's key information. To protect the user's key information from malicious use, relevant departments stipulate that when collecting the video and image data outside the vehicle, the vehicle cannot directly provide the unprocessed data to the outside of the vehicle. If required, it is needed to anonymize the face and license plate information in the data in the vehicle. Therefore, it is a key challenge to acquire and use data of an intelligent connected vehicle reasonably and efficiently on the premise of protecting privacy security of the user.

In the related art, data is mainly anonymized at a vehicle, the anonymized data is uploaded to a cloud, and model training is performed using the anonymized data at the cloud. Such a technique has a serious drawback: after the original data is anonymized, some important information will be lost, leading to bias when the algorithm model obtained by training predicts the non-anonymized data. Thus, a big error is caused, and the accuracy of the algorithm is affected. After a mass-produced vehicle is actually driven on the road, the algorithm performance will be reduced when using the original data for automatic driving related functions.

In addition, for the mass-produced connected vehicle, the acquisition, training, and deployment of automatic driving data do not form a closed-loop algorithm, which reduces the speed of algorithm training and model iteration.

### Summary of the Invention

In view of the above deficiencies present in the related art, an objective of the present disclosure is to provide a method for training data of an intelligent connected vehicle based on privacy data protection. According to the present disclosure, while data privacy transfer is ensured, the problem of algorithm performance reduction caused by data anonymization is solved. On the basis, a closed-loop algorithm is constructed, and the problem of model iteration and updating is addressed.

The technical solutions are implemented in this way.

A method for training data of an intelligent connected vehicle based on privacy data protection includes the following steps:
1) acquiring a first version of a model: labeling and performing model training on historically collected road test data at a cloud to obtain the first version of the model, and deploying a low-level feature extraction layer (e.g., a convolutional layer of the first two layers) of the first version of the model at a vehicle;
2) performing feature extraction on original data at the vehicle: performing feature extraction on the original data collected by the vehicle in real time or historically collected through the deployed low-level feature extraction layer in step 1) at the vehicle to obtain a low-level feature data set of the original data and uploading the low-level feature data set to the cloud;
3) performing desensitization on data at the vehicle: performing anonymization on key information in the original data at the vehicle to obtain anonymized data, uploading the anonymized data to the cloud, and labeling the data to obtain a labeled result data set;
4) preparing model updating data at the cloud: performing one-to-one correspondence between data in the labeled result data set in step 3) and data in the low-level feature data set in step 2) to form a model updating data set; and
5) optimizing the model: training and updating other feature extraction layers apart from the low-level feature extraction layer in the first version of the model using the obtained model updating data set in step 4) at the cloud, taking the low-level feature extraction layer and the updated other feature extraction layers as the optimized model, and pushing the optimized model to the vehicle for synchronous updating.

Further, in step 4), feature extraction is performed on the road test data at the cloud by a low-level feature extraction layer identical to the low-level feature extraction layer deployed at the vehicle in the first version of the model to obtain a low-level feature data set of the road test data, and a union of two sets of data in the low-level feature data set of the road test data and low-level feature data of the original data uploaded to the cloud is taken as the low-level feature data set in step 4).

Preferably, the model used in the model training in step 1) is a deep neural network.

Further, the deep neural network includes, but is not limited to, a convolutional neural network, a recurrent neural network and related variants thereof, and the supported algorithm includes, but is not limited to, an object detection algorithm, a lane line identification algorithm and a semantic segmentation algorithm.

In step 3), the key information of the original data includes, but is not limited to, a face and a license plate; and the anonymization includes, but is not limited to, mosaic making, solid color filling, and blurring.

In the present disclosure, the method used in the feature extraction in step 2) includes, but is not limited to, convolution, pooling, and slicing.

There are a different number of low-level feature extraction layers deployed at the vehicle in step 1), and a different number of the low-level feature extraction layers are simultaneously deployed at the vehicle at every deployment; and a plurality of other feature extraction layers corresponding to the low-level feature extraction layers at the vehicle are trained and updated at the cloud to obtain a plurality of optimized models, and a model with the best performance is synchronized to the vehicle in step 5).

The model updating data set used in algorithm iteration and updating in step 4) includes, but is not limited to, a road test data set, an original data set collected at the vehicle, and other data sets obtained by data enhancement, the other data sets including, but are not limited to data generated by performing flipping, rotating and scaling operations on the low-level feature set.

The present disclosure further provides an electronic device for training data of an intelligent connected vehicle based on privacy data protection, including a memory, configured to store executable instructions; and a processor, configured to execute the executable instructions stored in the memory to perform the method for training data of an intelligent connected vehicle based on privacy data protection described above.

The present disclosure further provides a computer-readable storage medium, storing thereon computer program instructions which perform the method for training data of an intelligent connected vehicle based on privacy data protection described above.

Compared with the related art, the present disclosure has the following beneficial effects.
1. In the present disclosure, by adding a feature extraction operation and performing anonymization at the vehicle to process the key information of the user, the privacy security of the user can be protected, and the key information is not leaked and uploaded, thus meeting regulatory requirements.
2. In the present disclosure, the information of the original data can be remained to a greater extent. The way of performing model training by purely anonymized data has a drawback of losing a lot of useful information. Compared with this way, in the present disclosure, the training effect of the algorithm can be effectively improved.
3. In the present disclosure, a closed loop of acquiring, labeling, and training data of an intelligent connected vehicle can be realized, and the performance of an automatic driving algorithm can be continuously improved after mass production, without spending a lot of money on road acquisition at the vehicle and algorithm updating.

### Brief Description of the Drawings

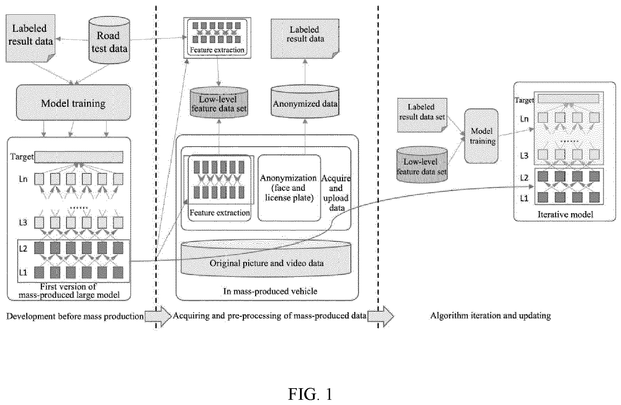

FIG. 1 is a logical architecture diagram of a method for training data of an intelligent connected vehicle based on privacy data protection according to the present disclosure.

### Detailed Description of the Embodiments

The present disclosure is described in further detail below with reference to the drawings and detailed description.

The present disclosure provides a method for acquiring, training, and iterating data of a connected vehicle based on privacy data protection. As shown in FIG. 1, the method is divided into three parts: (1) cloud algorithm development before mass production; (2) acquiring and pre-processing of mass-produced data; (3) algorithm iteration and updating. Through these three parts, on one hand, private data security of the user can be protected, the original data and information of the anonymized data are fully used to improve the algorithm performance. On the other hand, a closed-loop algorithm can be formed, and the iteration and updating abilities of the model can be enhanced. The three parts are separately described in detail below.

In the stage of cloud algorithm development before mass production (i.e., acquiring a first version of a model), historically collected road test data is labeled, such as labeling information of a pedestrian, a vehicle, a road sign, traffic lights, and the like. Then model training is performed. A deep neural network with feature extraction processing, such as convolution, pooling, and slicing, may be used to extract an image feature effectively, and is commonly used in scenes, including image classification and target recognition. According to different target tasks, different models and depths are selected. After repeated parameter adjustment and optimization, a first version of a mass-produced large model is obtained. The low-level feature extraction layers of the model are deployed at a vehicle. The specific number of the deployed layers is determined based on the MCU processing capacity and data uploading bandwidth of the vehicle. A smaller number of layers may remain more information of input data. A larger number of layers may extract a higher-level feature of the input data and reduce the amount of data transmission, but they may lose more information and increase the MCU processing burden of the vehicle. The model training method of the present disclosure supports both incremental migration learning and total algorithm training.

The stage of acquiring and pre-processing of mass-produced data, i.e., steps 2) to 4), includes acquiring and pre-processing three parts of data. In the mass-produced vehicle, on one hand, feature extraction is performed on the original picture or video data collected by the vehicle in real time or historically collected through the deployed low-level convolution layer before mass production, and low-level features of the original data are obtained and uploaded to the cloud. The low-level features are some partial features in the original data, and remain the partial and overall relationship. They are usually features of some straight lines and curves. Since the feature extraction will lose some information, it is difficult to distinguish the target object intuitively for the feature data which meets the regulatory requirements and may be uploaded to the cloud. Similarly, at the cloud, the same feature extraction operation is also performed on the massive road test data to obtain a low-level feature data set of the road test data, and a union of two sets of data in the low-level feature data set of the road test data and low-level feature data of the original data uploaded to the cloud is used for the next model iteration. On the other hand, in the mass-produced vehicle, by performing anonymization on key information in the original data, such as making a mosaic on a face and a license plate, the anonymized data is obtained and uploaded to the cloud for data labeling. The anonymized picture and video do not affect the determination of the object category and position, thus accurately labeling them without violating user privacy. The data may be uploaded when the vehicle is in a standby state. On one hand, the algorithm performance at the vehicle is not affected; on the other hand, the transmission can be kept stable.

In the stage of algorithm iteration and updating (i.e., model optimization), at the cloud, the low-level feature data set obtained in the previous stage and a corresponding labeled result data set is used for model training in the next stage and may be fused with historical training data. The data set herein includes, but is not limited to, the road test data set, the original data set historically collected at the vehicle, and other data sets generated by a data enhancement method. Because the training data is obtained based on a low-level network, this stage does not need to train the whole network model, but only needs to train and update a high-level network part of the mass-produce large model. The low-level feature extraction layers and other trained high-level feature extraction layers after training and updating are used as the optimized model. A certain pushing strategy is adopted, such as periodically pushing or version updating, and the optimized model after updating is pushed to the vehicle for synchronous updating to realize the closed loop of acquiring, training, and deployment of automatic driving data. Thus, with respect to the actually used mass-produced vehicle, the algorithm performance and driving experience are continuously improved.

In the present disclosure, while performing anonymization on the original data at the vehicle, a feature extraction operation is added to obtain low-level feature data of the original data. These two parts of data are used to solve the problem of algorithm performance reduction caused by data anonymization. On the basis, a closed-loop algorithm is constructed, and the problem of model iteration and updating is addressed. After feature extraction, this part of data is not original data, and private information is not leaked when it is uploaded to the cloud. The anonymized original data is uploaded, and the private information is accordingly not leaked. Labeling the anonymized data does not affect the accuracy of the labeling. Therefore, the present disclosure provides a method of an automatic driving closed-loop algorithm for acquiring, labeling, and training data of a connected vehicle. The present disclosure further provides an in-vehicle data processing method applied to privacy protection and remaining information of original data to a high degree.

Finally, it should be noted that the above embodiments of the present disclosure are merely examples for illustrating the present disclosure and do not limit the implementations of the present disclosure. While the present disclosure is described in detail with reference to the preferred embodiments, it will be understood by those skilled in the art that different forms of changes and variations may be made based on the present disclosure. It is not intended to be exhaustive of all embodiments. It is intended that all such obvious changes and variations arising from the technical solutions of the present disclosure are within the protection scope of the present disclosure.

## Claims

1. A method for training data of an intelligent connected vehicle based on privacy data protection, comprising the following steps:
1) acquiring a first version of a model: labeling and performing model training on historically collected road test data at a cloud to obtain the first version of the model, and deploying a low-level feature extraction layer of the first version of the model at a vehicle;
2) performing feature extraction on original data at the vehicle: performing feature extraction on the original data collected by the vehicle in real time or historically collected through the deployed low-level feature extraction layer in step 1) at the vehicle to obtain a low-level feature data set of the original data and uploading the low-level feature data set to the cloud;
3) performing desensitization on data at the vehicle: performing anonymization on key information in the original data at the vehicle to obtain anonymized data, uploading the anonymized data to the cloud, and labeling the data to obtain a labeled result data set;
4) preparing model updating data at the cloud: performing one-to-one correspondence between data in the labeled result data set in step 3) and data in the low-level feature data set in step 2) to form a model updating data set; and
5) optimizing the model: training and updating other feature extraction layers apart from the low-level feature extraction layer in the first version of the model using the obtained model updating data set in step 4) at the cloud, taking the low-level feature extraction layer and the updated other feature extraction layers as the optimized model, and pushing the optimized model to the vehicle for synchronous updating.

2. The method according to claim 1, wherein in step 4), feature extraction is performed on the road test data at the cloud by a low-level feature extraction layer identical to the low-level feature extraction layer deployed at the vehicle in the first version of the model to obtain a low-level feature data set of the road test data, and a union of two sets of data in the low-level feature data set of the road test data and low-level feature data of the original data uploaded to the cloud is taken as the low-level feature data set in step 4).

3. The method according to claim 1, wherein the model used in the model training in step 1) is a deep neural network; and
the deep neural network comprises, but is not limited to, a convolutional neural network, a recurrent neural network and related variants thereof, and the supported algorithm comprises, but is not limited to, an object detection algorithm, a lane line identification algorithm and a semantic segmentation algorithm.

4. The method according to claim 1, wherein in step 3), the key information of the original data comprises, but is not limited to, a face and a license plate; and the anonymization comprises, but is not limited to, mosaic making, solid color filling, and blurring.

5. The method according to claim 1, wherein the method used in the feature extraction in step 2) comprises, but is not limited to, convolution, pooling, and slicing.

6. The method according to claim 1, wherein the data is uploaded to the cloud when the vehicle is in a standby state in step 2) and step 3).

7. The method according to claim 1, wherein there are a different number of low-level feature extraction layers deployed at the vehicle in step 1), and a different number of the low-level feature extraction layers are simultaneously deployed at the vehicle at every deployment; and a plurality of other feature extraction layers corresponding to the low-level feature extraction layers at the vehicle are trained and updated at the cloud to obtain a plurality of optimized models, and a model with the best performance is synchronized to the vehicle in step 5).

8. The method according to claim 1, wherein the model updating data set used in algorithm iteration and updating in step 4) comprises, but is not limited to, a road test data set, an original data set collected at the vehicle, and other data sets obtained by data enhancement, the other data sets comprising, but are not limited to data generated by performing flipping, rotating and scaling operations on the low-level feature set.

9. An electronic device for training data of an intelligent connected vehicle based on privacy data protection, comprising a memory, configured to store executable instructions; and
a processor, configured to execute the executable instructions stored in the memory to perform the method for training data of an intelligent connected vehicle based on privacy data protection according to any one of claims 1 to 8.

10. A computer-readable storage medium, storing thereon computer program instructions which perform the method for training data of an intelligent connected vehicle based on privacy data protection according to any one of claims 1 to 8.
